# EUROPÄISCHE PATENTSCHRIFT

(11) **EP 4 267 875 B1**
(45) Veröffentlichungstag und Bekanntmachung des Hinweises auf die Patenterteilung: **11.02.2026**
(21) Anmeldenummer: 21836339.8
(22) Anmeldetag: 09.12.2021
(51) Int. Cl.: F16L 11/08, F16L 11/12

(54) **HOCHDRUCKSCHLAUCH**
HIGH-PRESSURE HOSE
TUYAU À HAUTE-PRESSION

(30) Priorität: 23.12.2020 DE 102020134910; 08.12.2021 DE 102021214011
(43) Veröffentlichungstag der Anmeldung: 01.11.2023
(73) Patentinhaber: ContiTech Deutschland GmbH, 30175 Hannover (DE)
(72) Erfinder: SCHMIDT, Alexander, 30165 Hannover (DE); WIETZKE, Steffen, 30165 Hannover (DE); HERRMANN, Wolfram, 30165 Hannover (DE); BRANDT, Alexandra, 30165 Hannover (DE)
(74) Vertreter: Preusser, Andrea
(86) Internationale Anmeldenummer: PCT/DE2021/200252
(87) Internationale Veröffentlichungsnummer: WO 2022/135637

(56) Entgegenhaltungen:
- EP-A1- 1 369 631
- EP-A1- 3 358 236
- US-A1- 2018 172 185

## Beschreibung

Die Erfindung betrifft einen Hochdruckschlauch, insbesondere für eine Fahr- oder Flugzeugbetankung mit Wasserstoff, der wenigstens folgenden Schichtenaufbau aufweist:
- eine innere Schicht, die als Barriereschicht wirkt und
- wenigstens eine Festigkeitsträgerschicht und
- eine äußere Schicht, die aus wenigstens einem polymeren Werkstoff aufgebaut ist.

Bei der Betankung von Wasserstofffahr- oder Wasserstoffflugzeugen kommen zwischen Füllkupplung und Betankungseinheit Hochdruckschläuche zum Einsatz. Als Hochdruckschläuche werden in der Fachwelt Schläuche bezeichnet, die einen Betriebsdruck von wenigstens 150 bar bis zu 3500 bar und mehr aufweisen. Bei der Betankung wird der Wasserstoff auf -40°C (minus vierzig Grad Celcius) heruntergekühlt und bei einem maximalen Druck von 875bar dem Fahrzeug/Flugzeug zugeführt. Der Berstdruck des Schlauchs muss dabei größer 3500bar sein. Die derzeit am Markt verfügbaren Hochdruckschläuche für diese Anwendung sind aufgrund der Druckanforderungen nicht besonders flexibel. Die unmittelbar vor während und nach dem Betankungsvorgang aufgebrachte dynamische Beanspruchung wie beispielsweise Torsion beeinflusst die Lebensdauer negativ. Die Schläuche sind nicht robust genug um einer ausreichend hohen Anzahl an Betankungsvorgängen Stand zu halten.

Die EP3358236 A1 zeigt einen Wasserstoffschlauch auf Basis von Polyamid.

Aufgabe der vorliegenden Erfindung ist es daher einen Hochdruckschlauch bereitzustellen, der sich durch eine hohe Zuverlässigkeit und eine bequeme Verwendung, in Summe durch eine hohe Anzahl an möglichen Betankungsvorgängen, auszeichnet. Hierzu muss der Schlauch möglichst robust aber gleichzeitig flexibel, insbesondere bei niedrigen Temperaturen, mit möglichst geringen Biegeradien, leitfähig und mit möglichst hoher Wasserstoff-Barrierewirkung ausgestattet sein. Gleichzeitig muss der Schlauch die Anforderungen der Normen SAE J2601 und ISO 19880-5 erfüllen.

Gelöst wird diese Aufgabe durch einen Hochdruckschlauch, der wenigstens folgenden Schichtaufbau aufweist:
- eine innere Schicht, die als Wasserstoff-Barriereschicht wirkt und aus einer einlagigen oder mehrlagigen extrudierten Zusammensetzung, enthaltend wenigstens ein Polymer mit einem hohen Kristallinitätsgrad oder einen Polymerblend mit einem hohen Kristallinitätsgrad, aufgebaut ist und
- wenigstens eine einlagige oder mehrlagige Festigkeitsträgerschicht und
- eine äußere Schicht, die aus wenigstens einem polymeren Werkstoff aufgebaut ist.

Überraschenderweise hat sich gezeigt, dass sich bei Verwendung eines Polymers mit einem hohen Kristallinitätsgrad für die Innenschicht ein deutlicher Vorteil hinsichtlich der Wasserstoff-Barrierewirkung ergibt.

Erfindungsgemäß ist die innere Wasserstoff-Barrierschicht einlagig oder mehrlagig aufgebaut und enthält wenigstens ein Polymer mit einem hohen Kristallinitätsgrad.

Polymere zeigen eine äußert komplexe Morphologie, denn sie sind niemals vollständig kristallin, sondern weisen eine teil- und polykristalline, metastabile Überstruktur auf. In erster Näherung sind geordnete kristalline Bereiche mit parallel liegenden Kettensegmenten von ungeordneten amorphen Bereichen umgeben, in denen die Makromoleküle verknäult und verhakt vorliegen (engl.: entanglements). Diese teilkristalline Phasenstruktur resultiert aus der Abkühlung des schmelzförmigen Polymers.

Die Überstruktur der teilkristallinen Morphologie besteht aus Sphärolithen mit einem Durchmesser von 0,01mm bis 0,1mm. Kristalline Bereiche wachsen dabei nach der Keimbildung (Nukleation) in Lamellen von einem Büschel aus unter Verzweigung und Verdrillung sowie leicht gebogen radial nach außen. Dazwischen bleiben amorphe Bereiche zurück. Radius des Sphäroliths und Achse der Makromoleküle in der Lamelle stehen dabei orthogonal zueinander.

Eine hoher Kristallinitätsgrad bedeutet ein Kristallinitätsgrad von größer oder gleich 20%, bevorzugt von größer oder gleich 40%, besonders bevorzugt von größer oder gleich 50%. Vorteilhaft ist es, wenn das Polymer von sich aus gleichzeitig einen geringen elektrischen Widerstand aufweist, der eine Ableitung von Ladungsträgern gewährleistet, also antistatisch ist, z.B. nach ISO_19880-5. Geringer elektrischer Widerstand bedeutet in diesem Fall einen Wert von nicht größer als 100 kΩ.

Für einen guten Kompromiss zwischen ausreichender Barrierewirkung und Steifigkeit des Schlauches hat die Barrierelage bevorzugt eine Gesamtschichtdicke über alle möglichen vorhandenen Lagen zwischen 0,1 bis 2,0 mm.

Als Polymere für die Barriereschicht werden folgende Elastomere und thermoplastische Materialien allein oder in Kombination, sofern sie einen hohen Kristallinitätsgrad aufweisen, eingesetzt: Fluorkautschuke (FKM), Elastomere Polyurethane (PU), Thermoplastische Polyurethane (TPU), Polyoxymethylene (POM), thermoplastisches Fluorelastomer-Vulkanisat (F-TPV), Polyvinylidenfluorid (PVDF) oder Polyethylene (PE), wie z.B. HDPE. Die genannten können hierbei allein oder in Kombination eingesetzt werden.

Bei Einsatz einer Kombination bezieht sich der Kristallinitätsgrad auf die Kombination, d.h. den Blend, der beiden Materialien.

Die einzelnen Lagen der Barriereschicht können hinsichtlich ihrer Zusammensetzung qualitativ und / oder quantitativ gleich oder verschieden voneinander sein.

Der erfindungsgemäße Schlauch enthält zudem wenigstens eine Festigkeitsträgerschicht und eine äußere Schicht, d.h. Außenschicht.

Die Festigkeitsträgerschicht besteht aus einer oder mehreren Lagen natürlicher oder synthetischer Festigkeitsträger.

Die Festigkeitsträgerschicht kann hierbei als Filz, Vlies, Gewebe, Geflecht, Gewirk, Gestrick, spiralisierte Cordlage oder Gelege ausgebildet sein. Es ist auch möglich, dass die Festigkeitsträgerschicht aus verschiedenen Komponenten aus Filz, Vlies, Gewebe, Geflecht, Gewirk, Gestrick, spiralisierter Cordlage oder Gelege ausgebildet ist. Es handelt sich bevorzugt um eine spiralisierte Cordlage, um ein Geflecht, um eine Kordware (engl. braided fabric) oder um eine Webware (engl. woven fabric), bei der die Fläche durch Verkreuzen von zwei Fadensystemen, nämlich Kette und Schuß, oder parallele Einzelfäden, die kreuzweise übereinander liegen, hergestellt wird, oder um eine Maschenware (engl. Knitted fabric), bei denen eine mittels Faden gebildete Schleife in eine andere Schleife hineingeschlungen ist und wobei die auf diese Weise entstehenden Maschen unter Verwendung eines oder mehrerer Fäden gebildet werden können.

Das Material für Festigkeitsträgerschicht ist bevorzugt ausgewählt aus der Gruppe bestehend aus Polyester (PES) und / oder Polyphenylensulfid (PPS) und / oder Polyoxadiazol (POD) und / oder Aramid (AR) und / oder Polyamid (PA) und / oder Polyvinylalkohol (PVA) und / oder Polyimid (PI) und / oder Polyetheretherketon (PEEK) und / oder Polyethylen-2,6-naphthalat (PEN) und / oder Polyphenylen (PPP) und / oder Polyphenylenoxid (PPO) und / oder Polyphenylenether (PPE) und / oder Polybenzoxazol (PBO) und / oder Glasfasern (GF) und / oder Baumwolle (CO) und / oder Gesteinsfasern, wie bspw. Basaltfasern, und / oder Cellulose und / oder Modal und / oder Keramikfasern und / oder Kohlenstoff und / oder Metall, wie bspw Kupfer oder Stahl.

Die genannten Materialien können allein oder in Kombination verwendet werden.

Bevorzugt ist es, wenn die Festigkeitsträgerschicht drei oder vier oder fünf Lagen besitzt, die jeweils gleich oder verschieden voneinander sein können.

Bevorzugt ist es, wenn für den erfindungsgemäßen Hochdruckschlauch spiralisierte Stahldrähte als Festigkeitsträgerschicht eingesetzt werden. Dadurch wird die beste Balance zwischen Hochdruckstabilität und Flexibilität des Schlauches gewährleistet.

Die äußere Schicht ist erfindungsgemäß aus wenigstens einem polymeren Werkstoff aufgebaut. Hierbei handelt es sich bevorzugt um wenigstens ein Elastomer oder um wenigstens einen Thermoplast oder um wenigstens ein thermoplastisches Elastomer oder um eine Kombination, d.h. einen Blend, aus wenigstens einem Elastomer und / oder wenigstens einem Thermoplast und / oder wenigstens einem thermoplastischen Elastomer.

Bevorzugt handelt es sich hierbei um FKM, SBR, NBR, AEM, ACM, ECO, CM, CR, SCM, PU, TPU, POM, TPV, Polyamide, wie bspw. PA6, PA11, PA12, die jeweils allein oder in Kombination eingesetzt werden können.

Die äußere Schicht ist einlagig oder mehrlagig aufgebaut und wird vorteilhafterweise extrudiert oder gewickelt. In einer besonders bevorzugten Ausführungsform ist die Außenschicht geprickt, d.h. perforiert, um Gasansammlungen in den einzelnen Schichten oder zwischen den Schichten zu vermeiden, die im schlimmsten Fall zu Ausfällen bspw. durch Delamination führen können.

In einer besonders bevorzugten Ausführungsform enthält der Hochdruckschlauch noch wenigstens eine Zwischenschicht. Die Zwischenschicht ist bevorzugt aus wenigstens einem polymeren Werkstoff aufgebaut, wobei es sich hier vorteilhafterweise um wenigstens ein Elastomer oder um wenigstens ein thermoplastisches Elastomer oder um wenigstens einen Thermoplast handelt. Die drei genannten können auch hier wieder in Kombination, d.h. als Blend, eingesetzt werden.

In einer bevorzugten Ausführungsform enthält der Hochdruckschlauch wenigstens eine Zwischenschicht, welche sich zwischen der Innenschicht und einer ersten Festigkeitsträgerschicht befindet. Hierdurch wird die Robustheit, insbesondere im Hinblick auf Torsion und Friktion, verbessert.

Als Materialien für die Zwischenschicht werden bevorzugt Nitrilkautschuk (NBR) oder (teil)hydrierter Nitril-Kautschuk (HNBR) oder Styrolbutadienkautschuk (SBR) oder FluorKautschuk (FKM) oder Chloropren-Kautschuk (CR) oder chloriertes Polyethylen (CM) oder chlorsulfoniertes Polyethylen (CSM) oder Polyepichlorhydrin (ECO) oder Acrylat-Kautschuk (ACM) oder Ethylen-Acrylat-Kautschuk (AEM) oder ealstomeres Polyurethan (PU) oder thermoplastisches Polyurethan (TPU) oder Thermoplastische Polyolefin Vulkanisate (TPV) jeweils allein oder in Kombination verwendet.

Zwischen allen Schichten besteht bevorzugt ein ausreichend guter Haftverbund, welcher in einer bevorzugten Ausführungsform durch Integration von dünnen Haftvermittlerschichten zwischen den Schichten gegeben ist.

Der erfindungsgemäße Hochdruckschlauch weist einen Innendurchmesser von 6 mm bis 5 cm auf.

Die Erfindung wird nun anhand einer schematischen Zeichnung und einer Versuchstabelle erläutert.

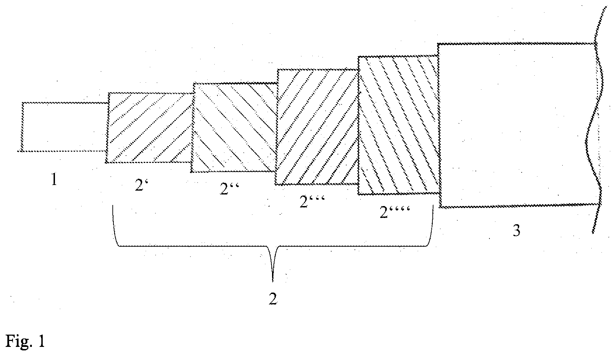

Fig. 1 zeigt einen erfindungsgemäßen Hochdruckschlauch mit einer Innenschicht 1 aus PA11, einer Festigkeitsträgerschicht 2, die aus vier Lagen 2', 2", 2‴, 2ʺʺ spiralisierter Stahldrähte (1.4404) besteht und einer Außenschicht 3 aus CM.

In Tabelle 1 sind die Ergebnisse von Prüfkörpern mit verschiedenen Innenschichten dargestellt. Als Prüfkörper wurde ein Schlauch mit folgendem Schichtaufbau verwendet:
- Innenschicht A (siehe Tabelle)
- Alternierend vier Lagen Haftschicht auf Basis von Styrolbutadienkautschuk (SBR) und vier Lagen spiralisierter Stahlcord bzw. bei der PEEK-Innenschicht eine Haftvermittlerlage und 4 Lagen Stahlcord
- Äußere Schicht aus CR/SBR-Blend

**Tabelle 1**

| Material der Innenschicht A | Kristallinitätsgrad (DSC) der Innenschicht in % | Wasserstoff-Leckage in cm³/h (ISO/FDIS 19880-5) | Schmelztemperatur in °C | Kerbschlagzähigkeit bei RT in kJ/m² |
|---|---|---|---|---|
| PA6/EVOH¹ | 12,6/50,3 | < 20 | 220/190 | 80/12 |
| PEEK | 29,5 | < 20 | 340 | 7 |
| POM-C | 62.1 | < 20 | 166 | 6,5 |
| FTPV | 18,4 | > 20 | 222 | n.b. |
| PA11 | 19,4 | > 20 | 182 | 75 |

| | | | | |
|---|---|---|---|---|
| ¹ Das bei dieser Temperatur barrierewirksame Material ist EVOH. | | | | |

Anhand Tabelle 1 zeigt sich, dass bei einem geringen Kristallinitätsgrad von weniger als 20% die Werte für die Wasserstoff-Leckage nicht mehr ausreichend sind.

### Bezugszeichenliste

### (Teil der Beschreibung)

- 1: Innenschicht
- 2: Festigkeitsträgerschicht
- 2': 1. Lage der Festigkeitsträgerschicht
- 2": 2. Lage der Festigkeitsträgerschicht
- 2‴: 3. Lage der Festigkeitsträgerschicht
- 2ʺʺ: 4. Lage der Festigkeitsträgerschicht
- 3: Außenschicht

## Patentansprüche

1. Hochdruckschlauch, der wenigstens folgenden Schichtenaufbau aufweist:
- eine innere Schicht (1), die als Wasserstoff-Barriereschicht wirkt und aus einer einlagigen oder mehrlagigen extrudierten Zusammensetzung, enthaltend wenigstens ein Polymer mit einem mittels DSC bestimmten hohen Kristallinitätsgrad von größer oder gleich 20% oder einen Polymerblend mit einem mittels DSC bestimmten hohen Kristallinitätsgrad von größer oder gleich 20%, aufgebaut ist und
- wenigstens eine einlagige oder mehrlagige Festigkeitsträgerschicht (2) und
- eine äußere Schicht (3), die aus wenigstens einem polymeren Werkstoff aufgebaut ist,
- wobei als Polymere für die Barriereschicht Fluorkautschuke (FKM), Elastomere Polyurethane (PU), Thermoplastische Polyurethane (TPU), Polyoxymethylene (POM), thermoplastisches Fluorelastomer-Vulkanisat (F-TPV), Polyvinylidenfluorid (PVDF) oder Polyethylene (PE) eingesetzt werden.

2. Verwendung eines Hochdruckschlauchs nach Anspruch 1 zur Betankung von Wasserstofffahrzeugen oder Wasserstoffflugzeugen.

## Claims

1. High-pressure hose having at least the following layer structure:
• an inner layer (1), which acts as a hydrogen barrier layer and consists of a single-layer or multilayer extruded composition containing at least one polymer with a high degree of crystallinity greater than or equal to 20% determined by DSC or a polymer blend with a high degree of crystallinity of 20% or greater than 20% as determined by DSC,
is structured and
at least one single-layer or multi-layer strength carrier layer (2) and
• an outer layer (3) composed of at least one polymer material,
• where the polymers for the barrier layer are fluororubbers (FKM), elastomers polyurethanes (PU), thermoplastic polyurethanes (TPU), polyoxymethylenes
(POM), thermoplastic fluoroelastomer vulcanizate (F-TPV), polyvinylidene fluoride (PVDF) or polyethylene (PE).

2. Use of a high-pressure hose according to claim 1 for refuelling hydrogen vehicles or hydrogen aeroplanes.

## Revendications

1. Tuyau haute pression ayant au moins la structure de couches suivante :
• une couche intérieure (1), qui agit comme une couche barrière à l'hydrogène et se compose d'un composition extradue à couche unique ou multicouche contenant au moins un polymère avec un haut degré de cristallinité supérieur ou égal à 20 % déterminé par le DSC ou un mélange polymère avec un haut degré de cristallinité de 20 % ou supérieur à 20 %, tel que déterminé par le DSC,
est structuré et
au moins une couche porteur de résistance monocouche ou multicouche (2) et
• une couche externe (3) composée d'au moins un matériau polymère,
• lorsque les polymères de la couche barrière sont les fluorocaoutchoucs (FKM), les élastomères, les polyuréthanes (PU), les polyuréthanes thermoplastiques (TPU), les polyoxyméthylènes (POM), fluoroélastomère thermoplastique vulcanizate (F-TPV), fluorure de polyvinylidène (PVDF) ou polyéthylène (PE).

2. Utilisation d'un tuyau haute pression selon la revendication 1 pour le ravitaillement en carburant de véhicules ou avions à hydrogène.
